# EUROPEAN PATENT SPECIFICATION

(11) **EP 3 426 558 B1**
(45) Date of publication and mention of the grant of the patent: **27.04.2022**
(21) Application number: 17719324.0
(22) Date of filing: 07.03.2017
(51) Int. Cl.: B64F 5/00

(54) **METHOD FOR ANALYSING AN AIRCRAFT, CORRESPONDING SYSTEM OF ANALYSIS OF AN AIRCRAFT, AND DE-ICING AND/OR ANTI- ICING SYSTEM**
VERFAHREN ZUR ANALYSE EINES FLUGZEUGS, ENTSPRECHENDES ANALYSESYSTEM EINES FLUGZEUGS UND ENTEISUNGS- UND/ODER VEREISUNGSSCHUTZSYSTEM
PROCÉDÉ D'ANALYSE D'AÉRONEF, SYSTÈME CORRESPONDANT D'ANALYSE D'AÉRONEF, ET SYSTÈME DE DÉGIVRAGE ET/OU ANTI-GIVRAGE

(30) Priority: 10.03.2016 IT UA20161534
(43) Date of publication of application: 16.01.2019
(73) Proprietor: Wpweb S.r.l., 10144 Torino (IT)
(72) Inventor: FALCONE, Alessandro, I-10144 Torino (IT); MICCONE, Davide, I-10144 Torino (IT)
(74) Representative: Meindl, Tassilo
(86) International application number: PCT/IB2017/051330
(87) International publication number: WO 2017/153912

(56) References cited:
- WO-A1-92/20575
- WO-A1-2015/059241
- US-A1- 2012 081 540
- Donecle: "Donecle - lightning fast aircraft inspections", , 12 October 2015 (2015-10-12), page 1, XP054976984, Retrieved from the Internet: URL:https://www.youtube.com/watch?v=4oSB4x wbBn8&feature=youtu.be [retrieved on 2016-12-06]
- Anonymous: "Easyjet develops flying robots to inspect aircraft - BBC News", , 7 May 2014 (2014-05-07), XP055319071, Retrieved from the Internet: URL:http://www.bbc.com/news/business-27308 232 [retrieved on 2016-11-14]
- Arthur Richards: "Optimized drone inspection of an A320", , 30 July 2014 (2014-07-30), page 1, XP054976986, Retrieved from the Internet: URL:https://www.youtube.com/watch?v=O7PjJt VaQwE&feature=youtu.be [retrieved on 2016-12-06]

## Description

### Technical field

The present disclosure relates to solutions for the analysis of an aircraft, for example for detecting ice on an aeroplane, and a corresponding de-icing and/or anti-icing system.

### Description of the prior art

Known to the art are de-icing systems for aircraft, such as aeroplanes. In particular, de-icing is a process in which ice, snow, frost, or sleet is removed from the aircraft, for example from the wings, tail surfaces, antennas, propellers, pressure intakes, and fuselage. The de-icing process may be followed by an anti-icing step, aimed at preventing formation of ice. In general, the two procedures may be carried out even simultaneously.

In general, the de-icing process may be carried out using mechanical methods, with the application of heat (see, for example, the document No. US 6,092,765) and/or with purposely provided fluids that lower the freezing point of water (see, for example, the document No. WO 2011/034992).

Typically, the de-icing process is long and the aircraft must delay take-off until an operator confirms that the ice, snow, or frost has been removed. Frequently, also a considerable amount of de-icing liquids have to be used, for example ethylene glycol, which renders the de-icing procedure costly and harmful for the environment.

For this reason, solutions have been proposed that envisage the use of sensors in such a way as to control the amount of liquid spayed on the aircraft directly as a function of the amount of ice that is present on the aircraft. These sensors hence enable reduction of the amount of de-icing liquid used, thus reducing the time and cost of the de-icing process.

For instance, the document No. WO 2011/034992 describes a solution in which a system is used comprising one or more nozzles that spray a liquid on the aircraft. In particular, these nozzles are mounted on a crane and can be displaced vertically. Also mounted on the crane are video cameras that can be used for detecting the edges of the aircraft using an edge-detection algorithm, and sensors that enable detection of the presence and possibly the thickness of a layer of ice in a given area of the aircraft.

Consequently, while the aircraft is passing under the structure, the cameras can detect the presence of the aircraft and activate spraying of the de-icing liquid according to the ice detected in the area of the aircraft that is located under the camera. Consequently, using a plurality of these nozzles/cameras, the entire surface of the aircraft can be monitored and treated.

The inventors have noted that the solution described in the document No. WO 2011/034992 presents numerous drawbacks.

A first problem is linked to the presence of a supporting structure, i.e., the crane, which in many airports is not easy to install.

Moreover, the aircraft must pass under the above structure during treatment, and the effectiveness of the treatment depends also upon the rate of advance of the aircraft, which should be adapted as a function of the amount of ice that is to be removed.

A further problem is linked to the fact that the system detects only the presence/absence of the aircraft and does not take into consideration the type of area that is to be treated, for example the wings and the tail surfaces. Consequently, to save liquid, the operator should deactivate certain nozzles manually when a portion of the aircraft that does not require any treatment is passing under the cameras.

The present invention relates thus to a method of analysing an aircraft by means of at least one drone according to the preamble of Claim 1, which is known, e.g. from document WO 2015/059241 A1.

### Object and summary of the present disclosure

The object of the present description is to provide solutions that permit to improve the analysis of the aircraft.

According to the invention, the above object is achieved by a method for analysing an aircraft having the characteristics that form the subject of Claim 1. The claims also regard a corresponding system of analysis of an aircraft according to claim 13 and de-icing and/or anti-icing system according to claim 15.

The claims form an integral part of the teaching provided herein in relation to the invention.

According to the invention, the aircraft is analysed by means of at least one drone comprising at least one sensor designed to analyse the surface of the aircraft. For instance, these sensors may comprise a sensor designed to detect the presence of ice on the surface of the aircraft, a video camera, etc.

Initially, at least one drone is brought into the area in which the aircraft is located, such as a given inspection area or a hangar. For instance, the drone or drones may be brought into the inspection area using a trolley, or dolly, or may fly autonomously to the inspection area.

According to the invention, a first scan of at least one part of the aircraft is performed. For instance, this first scan may be made via one or more drones and/or a camera installed in a known place, for example a camera installed in a hangar or on board a land vehicle, for example the dolly that carries the drone or drones. Consequently, during this first scan an image of at least one part of the aircraft may be acquired.

According to the invention, the first scan is then processed to determine automatically an inspection path for the drone or drones. For instance, in various embodiments, the position and orientation of the aircraft are detected thanks to the first scan, and the inspection path is determined on the basis of these data. To determine the inspection path, the system does determine the type of aircraft. For example, the type of the aircraft can be supplied at input to the system, or the type of the aircraft can be detected automatically by comparing the data of the first scan with reference data stored in a database. Then, once the type of aircraft is known, the system does access a database to obtain characteristic data for the respective type of aircraft and determine the inspection path thanks to these data. In general, the characteristic data may include directly the inspection path or data that identify a plurality of areas of the aircraft.

In various embodiments, the inspection path comprises not only data that identify the position required for each drone, but also data that identify the orientation of the sensors.

According to the invention, the system then makes, via the drone or drones, a second scan, following the inspection path and analysing simultaneously the surface of the aircraft via the sensor or sensors of the drone. For instance, during the second scan there may be acquired or obtained, for example via the database, a three-dimensional model of the aircraft, and the data acquired can be projected onto this three-dimensional model.

In various embodiments, the data acquired can be displayed via a display device, for example a virtual-reality or augmented-reality display device. Alternatively or in addition, the data may be used for driving a tanker robot in such a way as to spray in an automatic way a de-icing and/or anti-icing liquid on the areas of the surface of the aircraft that are coated with ice.

### Brief description of the drawings

Embodiments of the present description will now be described in detail with reference to the attached drawings, which are provided purely by way of nonlimiting example and in which:
- Figure 1 shows an embodiment of a system of analysis of an aircraft according to the present disclosure;
- Figure 2 shows a block diagram of an embodiment of a drone that can be used in the system of Figure 1;
- Figures 3a and 3b show two possible embodiments for the analysis of an aircraft using a plurality of drones;
- Figure 4 illustrates a flowchart of a process for analysis of an aircraft that can be implemented with the systems of Figures 1, 3a, and 3b;
- Figure 5 illustrates a possible inspection path that a drone can follow for analysis of an aircraft;
- Figure 6 illustrates a possible reference scheme for a drone;
- Figures 7 and 8 show two possible embodiments of displays designed to show the state of the aircraft to an operator;
- Figure 9 shows a possible embodiment of an automatic de-icing system that uses a remote-controlled tanker robot; and
- Figure 10 shows a block diagram of an embodiment of the tanker robot used in the system of Figure 8.

### Detailed description of embodiments

In the ensuing description various specific details are illustrated aimed at providing an in-depth understanding of the embodiments. The embodiments may be obtained without one or more of the specific details, or with other methods, components, materials, etc. In other cases, known structures, materials, or operations are not illustrated or described in detail so that various aspects of the embodiments will not be obscured.

Reference to "an embodiment" or "one embodiment" in the framework of the present description is intended to indicate that a particular configuration, structure, or characteristic described in relation to the embodiment is included in at least one embodiment. Hence, phrases such as "in an embodiment" or "in one embodiment", which may be present in various points of this description, do not necessarily refer to one and the same embodiment. Moreover, particular conformations, structures, or characteristics may be combined in any adequate way in one or more embodiments.

The references used herein are provided merely for convenience and hence do not define the sphere of protection or the scope of the embodiments.

As mentioned previously, the present disclosure regards to solutions for the analysis of an aircraft, for example for detection of ice on the aircraft, and a corresponding system for de-icing the aircraft.

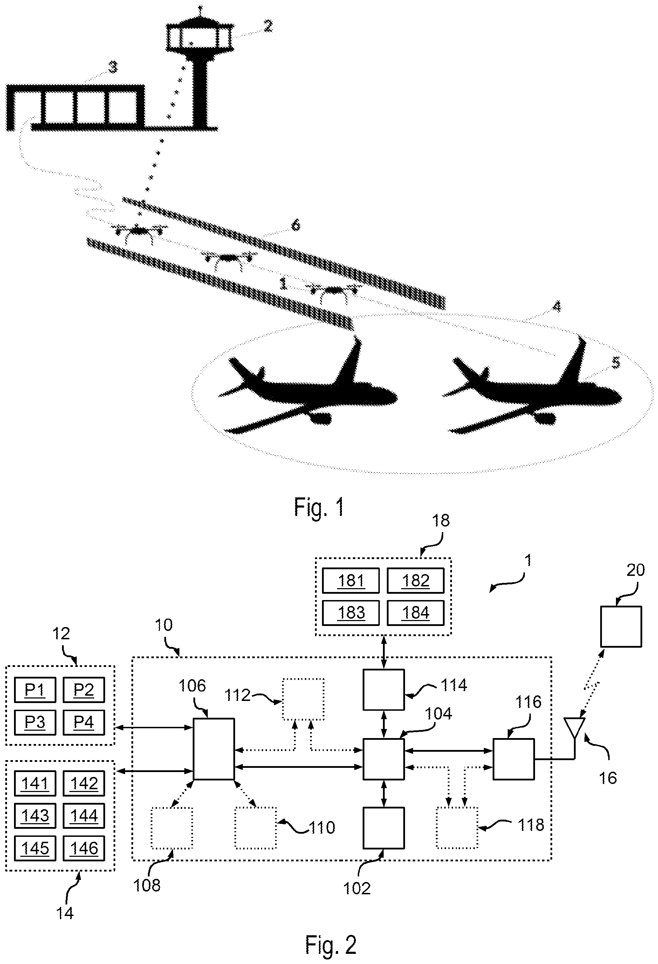

Figure 1 shows a first embodiment of a system of analysis according to the present description.

In particular, in the embodiment considered, the system is not based upon a fixed structure, but uses a drone 1 or a number of drones 1, a so-called "swarm of drones".

In general, by "drone" is meant an aircraft without remote-controlled pilot. Figure 2 shows, in this context, a possible embodiment of a drone 1.

In the embodiment considered, the drone 1 comprises one or more engines 12, for example propeller engines, which enable free displacement of the drone. For instance, in the embodiment considered, the drone 1 comprises four propeller engines P1, P2, P3, and P4.

In the embodiment considered, the movement of the drone 1 is remote controlled by a remote control unit 20 through a radio communication channel.

For this purpose, the drone 1 comprises a processing unit 10, such as a microprocessor programmed via software code, which manages remote communication with the control unit 20 and movement, i.e., driving of the engines 12.

In the embodiment considered, the processing unit 10 comprises at least the following software and/or hardware modules:
- a mission-management module 104;
- a data-processing module 102;
- a flight module 106; and
- a communication module 116.

In the embodiment considered, the mission-management module 104 is configured for controlling the various functions of the drone 1, for example remote management (by means of the module 116) and flight (by means of the module 106).

The data-processing module 102 is configured for possibly processing the data acquired by the drone 1. In general, this module 102 may also be incorporated in the module 104.

In the embodiment considered, the communication module 116 is connected to an antenna 16 and configured for communicating with the remote control unit 20 in such a way as to receive remote-control commands and/or to send data to the remote control unit 20, for example information on the state of the drone 1. In various embodiments, the communication exchanged through the module 116 is made via an encrypted communication protocol. For instance, the communication module 116 may comprise at least one of the following:
- a WiFi interface according to the IEEE 802.11 standard, communication with the control unit 20 possibly being made through one or more access points and a LAN (Local Area Network);
- a transceiver for a mobile network, such as a GSM (Global System for Mobile Communications) transceiver, a CDMA (Code Division Multiple Access) transceiver, a W-CDMA (Wideband Code Division Multiple Access) transceiver, a UMTS (Universal Mobile Telecommunications System) transceiver, an HSPA (HighSpeed Packet Access) transceiver, and/or an LTE (Long-Term Evolution) transceiver, communication with the control unit 20 possibly being made through a base station, and the Internet; and
- any other bidirectional radio-communication interface designed to transmit digital and/or analog signals.

The flight module 106 is configured for driving the engines 12 of the drone 1. For this purpose, the module 106 may be connected to one or more sensors 14. For instance, the sensors 14 may comprise at least one of the following:
- a triaxial accelerometer 141 for detecting the axial accelerations of the drone 1;
- a gyroscope 142 for detecting the angular accelerations of the drone 1;
- a sensor 143, for example a magnetic compass, for detecting the orientation of the drone 1;
- an altitude sensor 144, for example a pressure sensor, for detecting the altitude of the drone;
- an optional satellite-navigation receiver 145, for example a GPS, GALILEO and/or GLONASS receiver; and
- an optional SONAR (Sound Navigation and Ranging) system 146, comprising, for example, one or more ultrasound transceivers, configured for detecting possible obstacles.

In general, there may also be provided other sensors useful for identification of the position of the drone 1 and/or of the environment in which the drone 1 is located, such as a video camera connected to a sensing module that enables detection of possible obstacles or characteristic elements.

The flight module 106 may have associated also further modules. For instance, in the embodiment considered, the drone 1 comprises an anti-collision module 108 configured for supplying data to the module 106 useful for preventing collision. For instance, for this purpose, the module 108 may interface with the SONAR system 146 or with a video camera. This module may also be used for supplying data to the module 106 useful for enabling a controlled collision with given characteristics, for example to get the drone 1 to land.

For instance, typically the anti-collision and obstacle-detection functions are implemented in module with so-called sense-and-avoid functions, which typically exploits the data supplied by a SONAR system 146 and/or a video camera.

In various embodiments, the flight module 106 may be connected to a collision-tolerance module 110 that enables recovery of the trim of the drone 1, in the event of an unexpected collision.

In general, the drone 1 may comprise greater or lesser amount of intelligence on board. For instance, in one embodiment, the drone 1 is configured for receiving, through the module 116, low-level control commands. These low-level control commands may include, for example, a command for displacement in a given direction, a variation of the speed, etc.

Alternatively or in addition, the drone 1 may be configured for receiving, through the module 116, high-level control commands. These high-level control commands may include, for example, a command that indicates that the drone 1 should reach a given position (for example, a given GPS position), perform a given operation, etc.

For instance, for this purpose there may be provided a flight-control module 112 configured for receiving high-level control commands and sending low-level control commands to the flight module 106. For instance, for this purpose the flight-control module 112 may compare data that identify the position of the drone (for example, the position received by the receiver 145) with the position data received by means of one or more control commands.

In general, the flight-control module 112 may also control the module 106 on the basis of other data received from the sensors 14. For instance, in various embodiments, the satellite-navigation receiver 145 may be used in a differential way, which hence enables detection of the displacements of the drone 1 with high precision. Moreover, the flight-control module 112 may also use a camera for detecting characteristic objects that enable orientation of the drone 1.

As will be described hereinafter, in various embodiments, each drone 1 comprises a sensing module 114 and one or more sensors 18 designed to detect characteristics of the aircraft 5. For instance, in various embodiments, these sensors 18 comprise at least one of the following:
- one or more video cameras 181,
- a LIDAR (Light Detection and Ranging) system 182;
- a georadar 183; and/or
- a reflection sensor 184.

In general, the analysis of the data detected may be made in the modules 114 and/or 102 or at least partially in the remote control unit 20.

For instance, in various embodiments there may be provided a telemetering module 118, which sends the data acquired by the various sensors 14 and/or 18 through the communication module 116 to the remote control unit 20.

Initially, the drones 1 are parked in a purposely provided shelter 3, such as one or more hangars. Next, a drone or swarm of drones 1 receives from the remote control unit 20 a request for inspection of an aircraft 5 that is located in a given inspection area or target area 4. For instance, this request may be sent by the aircraft ground control 2.

Provided in one embodiment is just one target area 4 in a fixed position, and each aircraft 5 to be inspected must move into this target area 4. In this case, the path for reaching the target area 4 may be pre-configured.

In other embodiments, a number of target areas 4 may be envisaged, and/or the position of the target area 4 may be variable. In this case, the request for inspection may also comprise information that identifies the position of the target area requested, for example the identification of the target area 4 and/or the co-ordinates (for instance, the GPS position) of the target area 4 or of the aircraft 5 to be inspected. Also in this case, the path for reaching the target area 4 may (at least in part) be pre-configured.

For instance, in various embodiments the path for reaching the target area 4 may be configured (at least in part) via so-called geofences 6, which enable specification of two-dimensional or three-dimensional virtual barriers that the drone or drones 1 cannot overstep. For instance, in various embodiments, these geofences 6 are stored in the flight-control module 112 of the drone 1, and the control unit 20 could send only the position of the target area 4 that should be reached. Consequently, in general, each drone 1 can reach the target area 4 autonomously, for example via the geofences 6 and its own receiver 145, or be governed by the remote control unit 20 with low-level and/or high-level commands.

Once the target area 4 is reached, the drone or drones 1 makes/make a scan of the aircraft 5. Also in this case, the drone or drones 1 may perform the scan more or less autonomously.

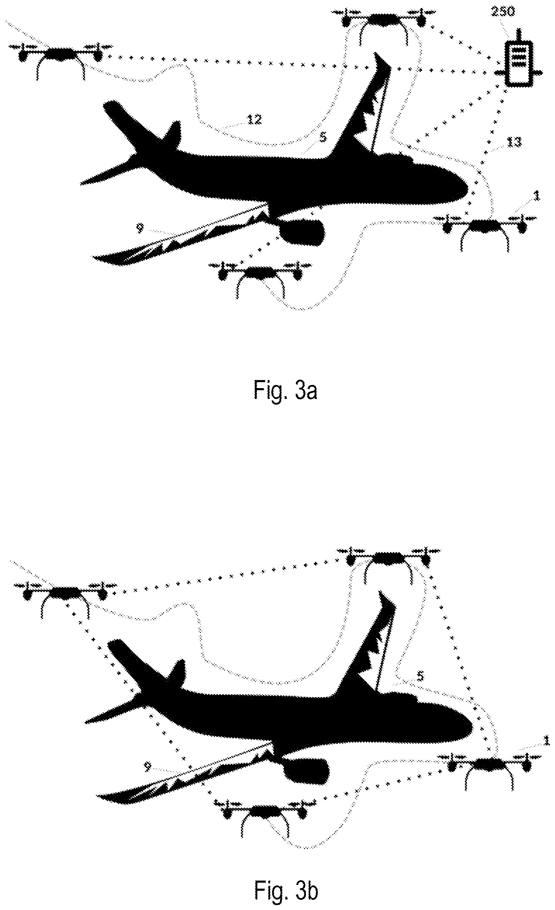

For instance, Figure 3a shows an embodiment in which the drone or drones 1 is/are in communication with a control unit 250, which could be the control unit 20 or another control unit provided in the target area 4.

In the embodiment considered, the control unit 250 communicates, through a communication channel 13 and the interface 116, with the drone or drones 1, for example, the control unit of the flight 112 illustrated in Figure 2, in such a way as to program the path 12 that each drone 1 should follow to scan the aircraft 5.

Instead, Figure 3b shows an embodiment in which the drone or drones 1 scan the aircraft 5 autonomously and preferably in co-ordination with one another. For instance, one of the drones 1 could perform the role of the control unit 250.

In general, co-ordination between the various drones may be obtained through purposely provided optimisation algorithms.

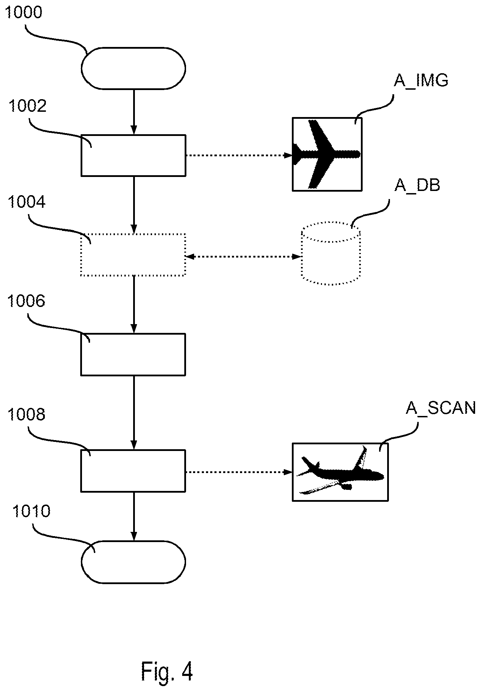

Figure 4 shows a possible embodiment of a method for scanning, i.e., analysing, an aircraft 5. This method may be implemented with both of the systems of analysis illustrated in Figures 3a and 3b.

After a starting step 1000, one or more drones 1 make, in a step 1002, a first rough scan of the aircraft 5 to identify the position of the aircraft 5 and detect the shape of the aircraft 5. In particular, the position of the aircraft may already be known, for example through the GPS position of the aircraft 5. However, frequently the exact position and orientation of the aircraft 5 may be unknown.

During this step, high precision is not required, and consequently a single drone 1 could take, with the camera 181, a photograph of the aircraft 5 from a medium-to-long distance (which substantially reproduces the entire aircraft 5) or fly over the aircraft 5 fast, taking a plurality of consecutive photographs, which enable reconstruction of the shape of the aircraft.

For instance, this scan 1002 may be made via a SLAM (Simultaneous Localization and Mapping) mechanism. SLAM systems are well known in the sector of robotics, which renders any detailed description herein superfluous. For instance, a possible solution is described in the paper by F. Caballero, L. Merino, J. Ferruz, A. Ollero, "Vision-Based Odometry and SLAM for Medium and High Altitude Flying UAVs", Journal of Intelligent and Robotic Systems, March 2009, Volume 54, Issue 1, pp 137-161, the contents of which are incorporated herein for reference.

In general, this scan 1002 could be made also by a plurality of drones, for example a plurality of drones 1 that fly over the aircraft in parallel or that take shots of different areas of the aircraft.

In general, the reconstruction of the aircraft 5 in step 1002 may be three-dimensional or even just two-dimensional and in general enables identification of the position, orientation, and rough shape of the aircraft 5. For instance, the result of the scan 102 could be a two-dimensional image A_IMG.

In general, detection of the aircraft 5 in step 1002 could be made also using a video camera mounted in a fixed position or on a land vehicle, such as a trolley or vehicle on which the control unit 250 is mounted. In this case, the drone or drones may orient itself/themselves also with respect to the position of this video camera.

Then, once the approximate shape of the aircraft 5 is known, the system can determine in a step 1006 the path that each drone 1 should follow.

For instance, a given area of the aircraft 5 could be assigned to each drone 1, thus preventing the need of make a scan of areas in which portions of the aircraft 5 are not present. Preferably, the paths are chosen so as to reduce the overall time of the step of analysis.

This embodiment does not, however, take into consideration the characteristics of the aircraft 5; for example:
- certain areas, such as the wings and the tail surfaces, are affected more by the presence of ice and consequently should be scanned more thoroughly;
- certain areas of the aircraft 5, such as the fuselage, have a volume, and consequently a surface that is larger than that of other rather planar areas, such as the wings, and this difference in surface cannot be derived from a two-dimensional display;
- the drone 1 should not fly in certain areas, for example the areas where the engines of the aircraft, such as the propellers or turbines, are located; and
- certain areas, such as the wings or the undercarriage, should also be inspected from underneath the aircraft 5.

Consequently, in a currently preferred embodiment, the system of analysis accesses, in a step 1004, a database A_DB, which comprises at least in part the aforesaid characteristics of the aircraft 5.

For instance, the type of aeroplane, for example its model number, is typically known to the aircraft ground control 2 and consequently this datum can be supplied also to the system of analysis. In the case where this datum is not available, the system of analysis can compare, in step 1004, the rough shape of the aircraft 5 detected in step 1002 also with reference data stored in the database A_DB in such a way as to detect the type of aircraft.

Consequently, knowing the type of aircraft and its position/orientation, the system can use the data stored in the database A_DB for calculating, in a step 1006, the path for each drone 1, taking into consideration also the characteristics of the aircraft 5, in particular with reference to the areas that are be analysed and the forbidden areas.

For instance, the database A_DB could comprise a three-dimensional model of the aircraft 5 divided into a plurality of areas, where associated to each area is an index. For instance, the index "0" could indicate a forbidden area, and the index "10" could indicate a high-risk area that requires a longer time of analysis. Consequently, knowing the various areas and indices (which may hence indicate the required times of analysis), the detection system is able to select paths that reduce the overall time of analysis for all the drones 1.

In general, in the database A_DB there could also be directly stored the inspection paths for each area of the aircraft 5. For instance, in this case, the various areas of the aircraft 5 may be assigned to different drones 1.

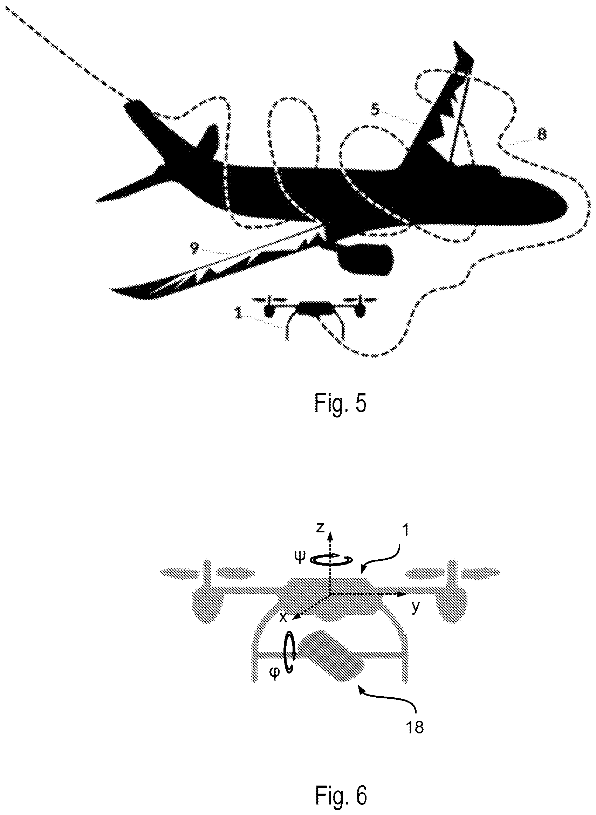

For instance, Figure 5 shows a part of a possible inspection path 8 for a single drone 1.

In various embodiments, the data that identify the inspection path 8 do not comprise only data that identify the path of flight, but also data that identify the orientation of the sensors 18. This orientation of the sensors 18 may be necessary, for example, for certain optical sensors or radars operating by reflection, which frequently require the ray emitted to be sent at substantially right angles onto the surface of the aircraft 5.

For instance, in the embodiment illustrated in Figure 6, the path of flight is identified with cartesian positions x, y, and z that the drone 1 should reach in given instants. Instead, the orientation of one or more sensors 18 may be specified via one or more angles. For example, in the embodiment considered, the inclination or the pitch ϕ and the yaw ψ of at least one sensor 18 may be specified. For instance, the inclination ϕ may be regulated via a motor that enables inclination of the sensor 18 with respect to the drone 1, i.e., rotation of the sensor 18 in a vertical direction. Instead, the angle ψ can correspond to the yaw of the drone 1 or there may be provided a further motor that enables rotation of the sensor 18 also horizontally. Consequently, in general, the sensors 18 may even be rigidly fixed to the drone 1, and the orientation of the sensors 18 may correspond to the orientation of the drone 1, which is hence appropriately rotated.

Consequently, in a step 1008 in Figure 4, the drone or drones 1 can follow the respective inspection path 8 determined in step 1006 and simultaneously perform the scan of the aircraft 5 in such a way as to detect the presence of ice 9 on the aircraft 5.

For instance, as described previously, the drone 1 may comprise for this purpose a LIDAR sensor.

Alternatively or in addition, there may also be used sensors that exploit the characteristics of reflectance of ice, for instance in the near-infrared spectrum, as described for example in the document No. US 5,500,530. For this purpose, for example, a multi-spectrum camera can be used that enables individual analysis of different spectra. These sensors with emitter and receivers that exploit the reflectance of ice (typically in the visible or infrared spectrum) are particularly useful since they are quite robust with regard to vibrations of a drone and can be used also in conditions of movement.

In particular, it is possible to determine the spectral signature of the surfaces contaminated by ice, snow, or frost, since each substance has a different spectral form of its own. The spectral image gathered by the multi-spectral camera contains detailed information both in the spatial domain and in the spectral domain. This enables determination of the spectral signature of the surfaces of the aeroplane and of the various types of contamination and correlation of the values of radiance detected by the sensor with the effective type of surface: frost, clear ice, fresh snow, etc.

Consequently, it is possible to derive a substantially continuous spectrum for each pixel of the image, thus making possible detection, identification, and quantification of the substance in the image in the highest possible detail. Using classification methods it is possible to analyse the spectral evolution of the individual pixels to recognise and select different materials or to enable high-resolution colorimetric measurements. For instance, in various embodiments, this calculation may be made with automatic learning methods, for example through clustering methods and/or neural networks.

To reduce the size of the data of the spectrum it is possible to select a specific set of wavelengths for a specific target (identification of areas contaminated by ice or the like), and the images acquired are used in a calculation process to produce output images in which some characteristics are highlighted (contamination).

In general, also other systems for remote detection of ice may be used within the drone 1, such as georadar systems 183.

For instance, in various embodiments, during scanning of the aircraft, one of the sensors 18 emits a polarised light. If the light reflected maintains the polarisation, the surface analysed can be classified as not contaminated. If the light reflected is instead de-polarised to some extent, the surface analysed can be classified as contaminated by ice, frost, or snow.

Next, the drone can also proceed to a more detailed analysis of the surface through the use of a sensor based upon georadar and/or LIDAR technology, which enable precise detection of the thickness of the layer of ice.

In general, the analysis of the data for detection of the ice may be made directly within the drone 1 or at least partially in the remote control unit 250. For instance, in various embodiments, processing and classification of the spectral data associated to each pixel of the multi-spectral camera is performed directly within the drone 1, for example in the modules 114 and/or 102, by associating, for instance, to each pixel a first value if the surface associated to the respective pixel is not contaminated and a second value if the surface associated to the respective pixel comprises ice. Likewise, there may be assigned further values to specific types of contamination, for example frost, clear ice, or snow. This embodiment hence presents the advantage that just a single image is transmitted, which identifies directly the type of contamination of the surface framed. Moreover, also the number of possible values associated to each pixel is very limited. For this reason, it may be sufficient to transmit an image, for example with shades of grey, in which each colour/value (encoded, for example, on 4 or 8 bits) identifies a given type of contamination.

To map the data, the SLAM system described previously may again be used, which hence enables association of the data detected by the sensors 18 with corresponding position data (detected by the sensors 14). For instance, once the position of the drone 1 and the orientation of the respective sensors 18 and the corresponding detected data are known, these data can be projected on the three-dimensional model of the aircraft 5 stored in the database A_DB.

In general, in step 1008 a three-dimensional model of the aircraft 5 could also be detected autonomously using the sensors that are already available within the drone 1, for example the SONAR system 146 and/or the video camera 181. For instance, a possible solution is described in the paper by Jorge Artieda, et al. "Visual 3-D SLAM from UAVs", Journal of Intelligent and Robotic Systems, August, 2009, 55:299, the contents of which are incorporated herein for reference.

Consequently, at the end of step 1008, the system of analysis has acquired the data from the various sensors 14/18 of each drone 1, has detected the presence of ice 9, and has associated the data to a three-dimensional model of the aircraft A_SCAN. For instance, in various embodiments, only the acquisition of the data is made via the drones 1, and detection of the shape of the aircraft A_IMG, management by the database A_DB, and mapping of the data on the three-dimensional model A_SCAN are made via the remote control unit 250, such as a computer programmed via a software code.

Finally, the sensing method terminates in a step 1010.

In general, also other data may be associated to the three-dimensional model of the aircraft A_SCAN. For instance, also the visual image detected by the camera 181 can be projected on the three-dimensional model of the aircraft A_SCAN. For example, this projection of the visual image could be used for detecting damage to the aircraft 5. In general, also other sensors of the drone 1, for example the LIDAR system, could be used for detecting possible damage to the aircraft 5. Consequently, in general, the sensing system for detecting ice described could be used even just for detecting damage to an aircraft 5, for example when the ambient temperature rules out *a priori* formation of ice.

Consequently, a number of information layers may be associated to the three-dimensional model of the aircraft A_SCAN. In particular, each layer corresponds to the projection of data (possibly processed) of a particular sensor 14/18 or of combined data from a number of sensors 14/18 that represent various characteristics of the aircraft 5, such as:
- the layer of ice on the aircraft 5;
- damaged areas of the aircraft 5;
- the thermal profile of the aircraft 5; and/or
- the visual appearance of the aircraft 5.

Consequently, these layers may be displayed separately or in overlay by an operator. In this case, the de-icing and/or anti-icing operations may be performed by a human operator, who avails himself of a display device to identify the contaminated areas of the aircraft.

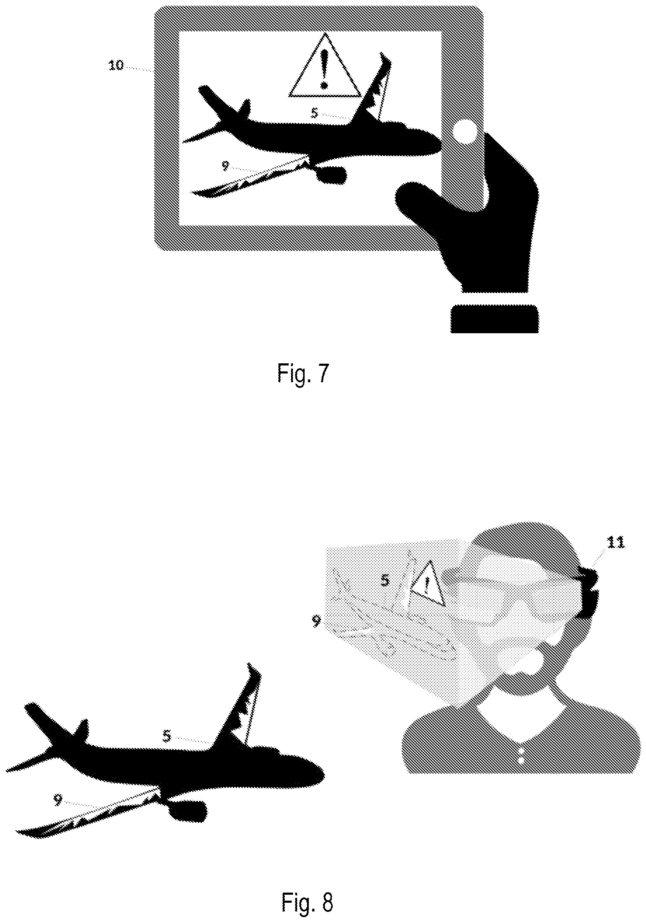

For instance, Figure 7 shows an embodiment in which a virtual-reality display device 10 is used, such as for example a smartphone, a tablet, a portable computer, or a similar device mounted inside a vehicle, which is in communication with the control unit 250 and comprises a program for display of the three-dimensional model of the aircraft A_SCAN. For instance, the application could enable activation/deactivation of display of the layers and/or rotation of the model A_SCAN. For instance, in the embodiment considered, only the display of the layer that comprises information that identifies the presence of ice is activated. For instance, the thickness of the layer of ice could be highlighted in this display, for example, via different colouring.

Likewise, Figure 8 shows an embodiment in which the three-dimensional model A_SCAN is displayed via an augmented-reality display device 11.

In this case, the three-dimensional model A_SCAN is not displayed directly, but the corresponding data are once again projected on a screen. In particular, an augmented-reality display device 11, such as a smartphone, a tablet, or augmented-reality glasses, typically comprises a camera that detects an image, and a position sensor, for example a GPS receiver. Then, once the position of the device is known, the augmented-reality device displays directly an image, in which the information of the three-dimensional model A_SCAN is projected directly on the image detected via the camera. In some augmented-reality devices, the data of the three-dimensional model can be projected directly on an at least partially transparent surface, for example glass, and display of the image detected by the camera of the display device 11 is no longer envisaged.

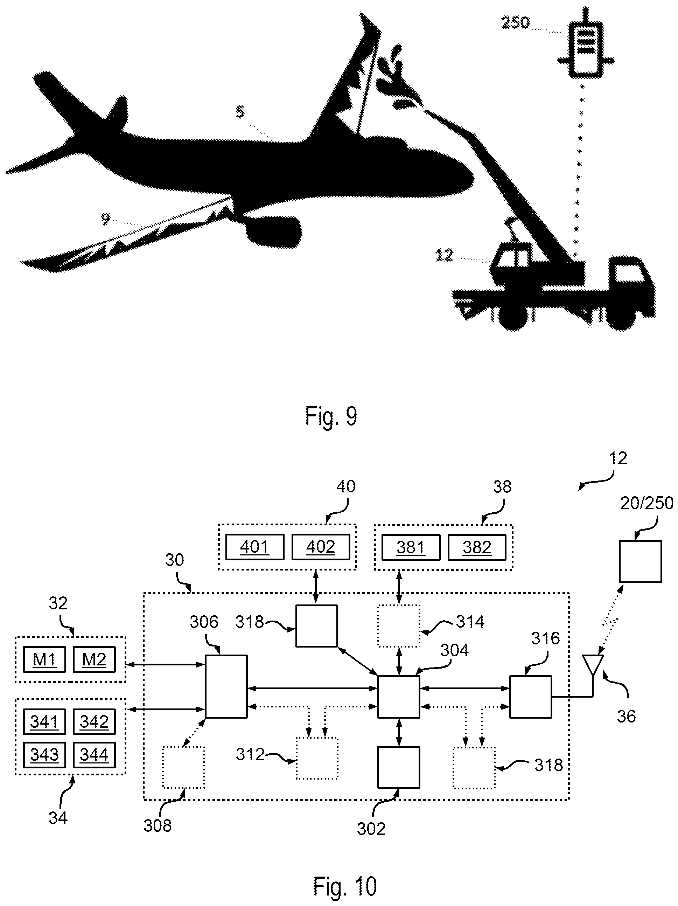

Finally, Figure 9 shows an embodiment in which the data are used for driving a tanker robot 12 directly.

Figure 10 shows in this context a possible embodiment of the tanker robot 12.

In the embodiment considered, the tanker robot 12 comprises a plurality of motors 32 that enable displacement of the tanker robot 12. For instance, in the embodiment considered, the robot 12 comprises a main motor M1 to move the robot 12 forwards or backwards, and an auxiliary motor M1 that enables steering of the tanker robot 12.

Also in this case, the movement of the robot 1 is remote-controlled by the remote control unit 20 and/or 250 through a radio communication channel.

Like the drone 1, the robot 12 comprises a processing unit 30, such as a microprocessor programmed via software code, which manages remote communication with the control unit 20/250 and movement, i.e., driving, of the motors 32.

In the embodiment considered, the processing unit 30 comprises at least the following software and/or hardware modules:
- a mission-management module 304;
- a data-processing module 302;
- a driving module 306; and
- a communication module 316;

The above modules substantially perform the same functions as the modules 102, 104, 106, and 116 of the drone 1, with the difference that the robot 12 is a land robot and does not fly.

Consequently, the mission-management module 304 can control the various functions of the robot 1, for example remote management (by means of the module 316) and driving (by means of the module 306). The data-processing module 302 may possibly process the data acquired by the robot 12. In general, this module 302 may also be incorporated in the module 304.

In the embodiment considered, the communication module 316 is connected to an antenna 36 and configured for communicating with the remote control unit 20/250 in such a way as to receive remote-control commands and/or send data to the remote control unit 20/250, for example information on the state of the robot 12. In various embodiments, the communication exchanged through the module 316 is made via an encrypted communication protocol.

The driving module 306 is configured for driving the motors 32 of the robot 12. For this purpose, the module 306 may be connected to one or more sensors 34. For instance, the sensors 34 may comprise:
- a triaxial accelerometer 341 for detecting the axial accelerations of the robot 12;
- a sensor 342, for example a magnetic compass, for detecting the orientation of the robot 12;
- an optional satellite-navigation receiver 343, for example a GPS, GALILEO, or GLONASS receiver; and
- an optional SONAR system 344, comprising, for example, one or more ultrasound transceivers, configured for detecting possible obstacles.

Also in this case, the module 306 may have associated further modules. For instance, in the embodiment considered, the robot 12 comprises an anti-collision module 308 configured for supplying data to the module 306 useful for preventing collision. As mentioned previously, the orientation and/or anti-collision functions may be implemented with a module with sense-and-avoid function.

Also the control commands for the robot 12 may be more or less complex. For instance, in one embodiment, the robot 12 is configured for receiving through the module 316 low-level control commands. These low-level control commands may include, for example, a command for displacement in a given direction, a variation of the speed, etc. In addition or as an alternative, the robot 12 may be configured for receiving, through the module 316, high-level control commands. These high-level control commands may include, for example, a command that indicates that the robot 12 should reach a given position (for example, a given GPS position), perform a given operation, etc. For instance, for this purpose, there may be provided a module for controlling driving 312 configured for receiving high-level control commands and sending low-level control commands to the driving module 306. For instance, for this purpose, the driving-control module 312 may compare data that identify the position of the robot 12 (for example, the position received from the GPS receiver 143) with the position data received together with a control command. In general, the driving-control module 312 may also control the module 306 on the basis of other data received by the sensors 34.

As mentioned previously, the tanker robot 12 should perform the de-icing operation automatically as a function of the ice data associated to the model A_SCAN. For this purpose, the robot 12 comprises one or more de-icing devices 40, such as one or more nozzles 401 for spraying a de-icing and/or anti-icing liquid on the aircraft 5. In various embodiments, the nozzles may be moved by a mechanical arm, preferably a telescopic arm, which has associated one or more actuators 402, such as hydraulic motors and/or pistons. In the embodiment considered, the nozzles 401 and the actuators 402 are controlled via a de-icing module 320. Consequently, once the position of the robot 12 and the position of the ice 9 on the aircraft 5 (thanks to the model A_SCAN) are known, the de-icing device 40 may be driven by the module 320 and/or by the remote control unit 20/250 in such a way as to spray the liquid on the ice 9. Like the drone 1, the control unit 20/250 could then calculate a guide path for the robot 12 and control data for the device 40, for example the position of the mechanical arm 402 and opening of the nozzle 401.

In general, also the robot 12 may comprise a sensing module 314 and one or more sensors 38 designed to detect characteristics of the aircraft 5, which may correspond at least in part to the sensors 18 of the drone 1. For instance, in various embodiments, these sensors 38 comprise one or more cameras 381 and/or a LIDAR system 382. In general, analysis of the data detected may be made in the modules 314 and/or 302 or at least partially in the remote control unit 20/250. Consequently, the robot 12 could check directly whether the ice 9 has been removed. Moreover, also the robot 12 may comprise a telemetering module 318 configured for sending the data acquired by the sensors 34/38 to the remote control unit 20/250.

In various embodiments, the robot 12 may subsequently apply a second liquid, for example a de-icing liquid. In general, also in this case the database A_DB may be used, which could comprise data that identify the areas in which the de-icing liquid should be applied.

Consequently, in the solutions described previously, the drone 1 moved towards the aircraft 5 after it has received the information of the area 4 on which to operate, i.e., the area where the aircraft 5 is parked. For instance, the information may be supplied by the aircraft ground control 2 and may comprise the GPS co-ordinates of the aircraft 5. The drone or the swarm of drones 1 starts/start from a purposely provided shelter 3 present in the airport grounds and reach the target area 4 present in which is the aircraft 5 on which to operate. These operations may be performed in connection with the airport safety systems so as not to jeopardize the operations regarding air traffic and ground traffic. Moreover, approach to the aircraft may be performed via corridors purposely prearranged using geofence systems, which enable passage of the drone 1 only in some specific areas and not in others. Alternatively, the drone or drones 1 may be carried on a purposely provided dolly in the area 4.

Once the drone 1 reaches the target area 4 where the aircraft on which to carry out operations of analysis is parked, it is oriented with respect to the aircraft 5. For instance, in various embodiments, the drone 1 has available SLAM components, which may comprise, for example ultrasound sensors, scanner lasers, camera sensors, 3D-image sensors, or any other sensor that is able to identify objects and/or depths and that enables measurement of distances between points or acquisition of point-cloud information. Next, the drone 1 scans, via its own SLAM components, the objects around the target area.

Preferably, on the basis of the mission mandate, which specifies the type of aircraft on which to carry out the inspection and de-icing operations and the database A_DB, the drone 1 identifies the aircraft 5 on which it has to carry out its own operations. For instance, recognition of the aircraft 5 may derive from a comparison between the scan A_IMG made by the drone 1 of the object comprised in the target area and the models of aircraft present in the database A_DB. As an alternative or in addition to a scan of the entire aircraft, purposely provided markers or characteristic elements of each aircraft that enable acceleration of the recognition process may be used. For instance, if the fuselage of the aircraft has certain characteristics and not others, it certainly corresponds to a given model of aircraft and not to another.

Consequently, the drone 1 can orient itself with respect to the aircraft 5, knowing the type, position, and orientation of the aircraft 5 and/or using as reference characterizing elements thereof (fuselage, wings, tail, etc.), and can start the inspection activity, for example starting from the areas of the aircraft 5 more subject to icing.

Consequently, during this step, the drone 1 makes an analysis or inspection of the entire aircraft 5. Also in this case, it is possible to use the SLAM components for identifying the areas of the aircraft to be inspected, an inspection algorithm that assigns to the drone an inspection path, and sensors based upon optical technologies and/or radars.

For a faster execution of the inspection activities, the system may be implemented through a coordinated swarm of drones. Co-ordination may be performed at a software level by distributing the tasks among various drones. One drone may for example perform an inspection only of the wings of the aircraft, whilst another may check the bow, fuselage, tail, and other parts.

During scanning or even subsequently, the contaminated areas identified by the sensors 18 are associated to the three-dimensional model of the aircraft A_SCAN. During scanning of the aircraft, also other analyses of the surface of the aircraft may be made, for example via the camera 181. The acquisitions made may be transmitted to the central processor 20/250, which can evaluate the presence of damaged areas. This processing may also take into consideration the expected status of a scanned area (e.g., smooth surface) with the status detected from the scan (e.g., unexpected rough areas). For instance, the above expected status may be stored also in the database A_DB. Possible elements of inconsistency between the expected status and the one detected may be highlighted by associating the points of interest to the three-dimensional model of the aircraft A_SCAN. The drone 1 may also be equipped with a multi-spectral camera for taking close-ups of the potential damaged areas. These close-ups may be checked by human operators to ascertain the degree and nature of the damage.

After scanning is through and after the contaminated and/or damaged areas have been associated to the three-dimensional model of the aircraft 5, the system sends the images thus processed to a display. As mentioned previously, the display 10/11 may be an augmented-reality system made available to the operator, in the case where the de-icing operations are performed directly by the operator. The de-icing operations may consist in spraying purposely provided de-icing and anti-icing fluids. Via the display, the operator may be able to see both in immersive mode the three-dimensional model of the areas of the aircraft on which to operate and in subjective mode the contaminated areas, which are, for example, highlighted with different colour gradients with respect to the surface of the aircraft.

At the end of the de-icing activity, the drone 1 can perform another scan to check the results thereof and supply the operator with warnings in the case of critical features (incomplete de-icing activity), providing a further display of the contaminated areas.

The data gathered by the drone 1 may also be used for processing a path for a tanker robot 12, which corresponds substantially to a remote-controlled tanker, which can spray the de-icing liquid. For instance, this remote-controlled tanker 12 can be equipped with a mobile arm and carry out the de-icing activity on the basis of the information received from the drone 1.

Of course, without prejudice to the principle of the invention, the details of construction and the embodiments may vary widely with respect to what has been described and illustrated herein purely by way of example, without thereby departing from the scope of the present invention, as defined by the ensuing claims.

## Claims

1. A method of analysing an aircraft (5) being located in an inspection area (4) by means of at least one drone (1) comprising at least one sensor (18) adapted to a analyse the surface of said aircraft (5), the method comprising the steps of:
- bringing said at least one drone (1) in said inspection area (4);
- making a first scan (1002) of at least one part of said aircraft (5);
- processing said first scan (1004) in order to determine automatically (1006) an inspection path (12) for said at least one drone (1), said processing comprising:
- determining the type of said aircraft (5),
- accessing a database (A_DB) in order to obtain characteristic data for said type of said aircraft (5); and
- determining said inspection path (12) as a function of said characteristic data for said type of said aircraft (5); and
- making by means of said at least one drone (1) a second scan (1008) following said inspection path (12) and simultaneously analysing the surface of said aircraft (5) by means of said at least one sensor (18);
**characterized in that** said database (A_DB) comprises a three-dimensional model of said aircraft (5) divided into a plurality of areas, where associated to each area is an index indicating whether the respective area is to be analysed or a forbidden area.

2. The method according to Claim 1, wherein said indices indicate the required times of analysis.

3. The method according to Claim 2, wherein a first index indicates a forbidden area, and a second index indicates a high-risk area that requires a longer time of analysis.

4. The method according to Claim 2 or Claim 3, comprising analysing said aircraft (5) by means of a plurality of drones (1) and, knowing the various areas and indices, selecting inspection paths (12) that reduce the overall time of analysis for all drones (1).

5. The method according to any of the previous claims, wherein said making a first scan (1002) of at least one part of said aircraft (5) comprises acquiring via said at least one drone (1) and/or a camera installed in a known place an image of at least one part of said aircraft (5).

6. The method according to any of the previous claims, wherein said processing said first scan (1004) for determining (1006) an inspection path (12) for said at least one drone (1) comprises determining the position and orientation of said aircraft (5) and determining (1006) said inspection path (12) for said at least one drone (1) as a function of said position and said orientation of said aircraft (5).

7. The method according to any of the previous claims, wherein said inspection path (12) comprises data identifying the positions (x, y, z) for said at least one drone (1) and data identifying the orientations for said at least one sensor (18).

8. The method according to any of the previous claims, wherein said making by means of said at least one drone (1) a second scan (1008) comprises:
- determining a three-dimensional model (A_SCAN) of said aircraft (5), and
- projecting the data detected by means of said at least one sensor (18) on said three-dimensional model of said aircraft (5).

9. The method according to Claim 8, wherein said three-dimensional model of said aircraft (5) is stored in said database (A_DB).

10. The method according to any of the previous claims, comprising displaying the data detected by means of said at least one sensor (18) via a display device, such as a virtual reality (10) or augmented reality (11) display device.

11. The method according to any of the previous claims, wherein said at least one sensor (18) comprises at least one sensor adapted to detect the presence of ice (9) on the surface of said aircraft (5).

12. The method according to Claim 11, comprising driving a tank robot (12) as a function of said data detected by means of said at least one sensor (18) in order to spray a de-icing and/or anti-icing liquid on the areas of the surface of said aircraft (5) that comprise ice (9).

13. An analysis system for an aircraft, comprising at least one drone (1) and a processing unit (250), wherein said analysis system is configured to implement the method according to any of the previous claims 1 to 11.

14. The system according to Claim 13, wherein said processing unit (250) is incorporated in said at least one drone (1) or remote with respect to said at least one drone (1).

15. A de-icing and/or anti-icing system, comprising the analysis system of Claim 13 and a tank robot (12), and wherein the de-icing and/or anti-icing system is configured to implement the method according to Claim 12.

## Patentansprüche

1. Ein Verfahren zur Analyse eines Flugzeugs (5), das sich in einem Inspektionsbereich (4) befindet, mittels mindestens einer Drohne (1), die mindestens einen Sensor (18) umfasst, der zur Analyse der Oberfläche des Flugzeugs (5) geeignet ist, wobei das Verfahren die folgenden Schritte umfasst:
- Bringen der mindestens eine Drohne (1) in den Inspektionsbereich (4);
- Durchführen eines ersten Scans (1002) von mindestens einem Teil des Flugzeugs (5);
- Verarbeiten des ersten Scans (1004), um automatisch (1006) einen Inspektionspfad (12) für die mindestens eine Drohne (1) zu bestimmen, wobei das Verarbeiten umfasst:
- Bestimmen des Typs des Flugzeugs (5),
- Zugreifen auf eine Datenbank (A_DB), um charakteristische Daten für den Typ des Flugzeugs (5) zu erhalten; und
- Bestimmen des Inspektionspfads (12) als Funktion der charakteristischen Daten für den Typ des Flugzeugs (5); und
- Durchführen eines zweiten Scans (1008) mittels der mindestens einen Drohne (1), der dem Inspektionspfad (12) folgt, und gleichzeitiges Analysieren der Oberfläche des Flugzeugs (5) mittels des mindestens einen Sensors (18);
**dadurch gekennzeichnet, dass** die Datenbank (A_DB) ein dreidimensionales Modell des Flugzeugs (5) umfasst, das in eine Mehrzahl von Bereichen unterteilt ist, wobei jedem Bereich ein Index zugeordnet ist, der anzeigt, ob der jeweilige Bereich zu analysieren ist oder ein verbotener Bereich ist.

2. Das Verfahren nach Anspruch 1, wobei die Indizes die erforderlichen Analysezeiten angeben.

3. Das Verfahren nach Anspruch 2, wobei ein erster Index einen verbotenen Bereich anzeigt und ein zweiter Index einen Bereich mit hohem Risiko anzeigt, der eine längere Analysezeit erfordert.

4. Das Verfahren nach Anspruch 2 oder Anspruch 3, umfassend das Analysieren des Flugzeugs (5) mittels einer Vielzahl von Drohnen (1) und, in Kenntnis der verschiedenen Bereiche und Indizes, das Auswählen von Inspektionswegen (12), die die Gesamtdauer der Analyse für alle Drohnen verkürzen (1).

5. Das Verfahren nach einer der vorhergehenden Ansprüche, wobei das Durchführen eines ersten Scans (1002) von mindestens einem Teil des Flugzeugs (5) das Erfassen über die mindestens eine Drohne (1) und/oder eine Kamera, die an einer bekannten Stelle installiert ist, ein Bild von mindestens einem Teil des Flugzeugs (5), umfasst.

6. Das Verfahren nach einem der vorhergehenden Ansprüche, wobei das Verarbeiten des ersten Scans (1004) zum Bestimmen (1006) eines Inspektionspfads (12) für die mindestens eine Drohne (1) das Bestimmen der Position und Ausrichtung des Flugzeugs (5) und Bestimmen (1006) des Inspektionspfads (12) für die mindestens eine Drohne (1) als Funktion der Position und der Ausrichtung des Flugzeugs (5) umfasst.

7. Das Verfahren nach einem der vorhergehenden Ansprüche, wobei der Inspektionspfad (12) Daten zur Identifizierung der Positionen (x, y, z) für die mindestens eine Drohne (1) und Daten zur Identifizierung der Ausrichtungen für den mindestens einen Sensor (18) umfasst.

8. Das Verfahren nach einem der vorhergehenden Ansprüche, wobei das Durchführen eines zweiten Scans (1008) mittels der mindestens einen Drohne (1) umfasst:
- Bestimmen eines dreidimensionalen Modells (A_SCAN) des Flugzeugs (5), und
- Projizieren der von dem mindestens einen Sensor (18) erfassten Daten auf das dreidimensionale Modell des Flugzeugs (5).

9. Das Verfahren nach Anspruch 8, wobei das dreidimensionale Modell des Flugzeugs (5) in der Datenbank (A_DB) gespeichert ist.

10. Das Verfahren nach einem der vorhergehenden Ansprüche, umfassen das Anzeigen der mittels des mindestens einen Sensors (18) erfassten Daten über eine Anzeigevorrichtung, wie eine Anzeigevorrichtung für virtuelle Realität (10) oder eine Anzeigevorrichtung für erweiterte Realität (11).

11. Das Verfahren nach einem der vorhergehenden Ansprüche, wobei der mindestens eine Sensor (18) mindestens einen Sensor umfasst, der geeignet ist, das Vorhandensein von Eis (9) auf der Oberfläche des Flugzeugs (5) zu erkennen.

12. Das Verfahren nach Anspruch 11, umfassend das Antreiben eines Tankroboters (12) als Funktion der mittels des mindestens einen Sensors (18) erfassten Daten, um eine Enteisungs- und/oder Vereisungsschutzflüssigkeit auf die Bereiche der Oberfläche des Flugzeugs (5) zu sprühen, die Eis (9) aufweisen.

13. Ein Analysesystem für ein Flugzeug, umfassend mindestens eine Drohne (1) und eine Verarbeitungseinheit (250), wobei das Analysesystem konfiguriert ist, das Verfahren nach einem der vorhergehenden Ansprüche 1 bis 11 durchführen.

14. Das System nach Anspruch 13, wobei die Verarbeitungseinheit (250) in die mindestens eine Drohne (1) eingebaut ist oder von der mindestens einen Drohne (1) entfernt ist.

15. Ein Enteisungs- und/oder Vereisungsschutzsystem, umfassend das Analysesystem nach Anspruch 13 und einen Tankroboter (12), und wobei das Enteisungs- und/oder Vereisungsschutzsystem zur Durchführung des Verfahrens nach Anspruch 12 konfiguriert ist.

## Revendications

1. Procédé d'analyse d'un aéronef (5) situé dans une zone d'inspection (4) au moyen d'au moins un drone (1) comprenant au moins un capteur (18) adapté pour analyser la surface dudit aéronef (5), le procédé comprenant les étapes consistant à :
- amener ledit au moins un drone (1) dans ladite zone d'inspection (4) ;
- réaliser un premier balayage (1002) d'au moins une partie dudit aéronef (5) ;
- traiter ledit premier balayage (1004) afin de déterminer automatiquement (1006) un trajet d'inspection (12) pour ledit au moins un drone (1), ledit traitement comprenant :
- la détermination du type dudit aéronef (5),
- l'accès à une base de données (A_DB) afin d'obtenir des données caractéristiques pour ledit type dudit aéronef (5) ; et
- la détermination dudit trajet d'inspection (12) en fonction desdites données caractéristiques pour ledit type dudit aéronef (5) ; et
- réaliser, au moyen dudit au moins un drone (1), un deuxième balayage (1008) suivant ledit trajet d'inspection (12), et analyser simultanément la surface dudit aéronef (5) au moyen dudit au moins un capteur (18) ;
**caractérisé en ce que** ladite base de données (A_DB) comprend un modèle tridimensionnel dudit aéronef (5) divisé en une pluralité de zones, où est associé à chaque zone un indice indiquant si la zone respective doit être analysée ou s'il s'agit d'une zone interdite.

2. Procédé selon la revendication 1, dans lequel lesdits indices indiquent les temps d'analyse nécessaires.

3. Procédé selon la revendication 2, dans lequel un premier indice indique une zone interdite, et un deuxième indice indique une zone à haut risque qui nécessite un temps d'analyse plus long.

4. Procédé selon la revendication 2 ou la revendication 3, comprenant l'analyse dudit aéronef (5) au moyen d'une pluralité de drones (1) et, en connaissant les zones et indices divers, la sélection de trajets d'inspection (12) qui réduisent le temps global d'analyse pour tous les drones (1).

5. Procédé selon l'une quelconque des revendications précédentes, dans lequel ladite réalisation d'un premier balayage (1002) d'au moins une partie dudit aéronef (5) comprend l'acquisition, via ledit au moins un drone (1) et/ou une caméra installée dans un lieu connu, d'une image d'au moins une partie dudit aéronef (5).

6. Procédé selon l'une quelconque des revendications précédentes, dans lequel ledit traitement dudit premier balayage (1004) pour déterminer (1006) un trajet d'inspection (12) pour ledit au moins un drone (1) comprend la détermination de la position et de l'orientation dudit aéronef (5) et la détermination (1006) dudit trajet d'inspection (12) pour ledit au moins un drone (1) en fonction de ladite position et de ladite orientation dudit aéronef (5).

7. Procédé selon l'une quelconque des revendications précédentes, dans lequel ledit trajet d'inspection (12) comprend des données identifiant les positions (x, y, z) pour ledit au moins un drone (1), et des données identifiant les orientations pour ledit au moins un capteur (18).

8. Procédé selon l'une quelconque des revendications précédentes, dans lequel ladite réalisation, au moyen dudit au moins un drone (1), d'un deuxième balayage (1008) comprend :
- la détermination d'un modèle tridimensionnel (A_SCAN) dudit aéronef (5), et
- la projection des données détectées au moyen dudit au moins un capteur (18) sur ledit modèle tridimensionnel dudit aéronef (5).

9. Procédé selon la revendication 8, dans lequel ledit modèle tridimensionnel dudit aéronef (5) est stocké dans ladite base de données (A_DB).

10. Procédé selon l'une quelconque des revendications précédentes, comprenant l'affichage des données détectées au moyen dudit au moins un capteur (18) via un dispositif d'affichage, tel qu'un dispositif d'affichage de réalité virtuelle (10) ou de réalité augmentée (11).

11. Procédé selon l'une quelconque des revendications précédentes, dans lequel ledit au moins un capteur (18) comprend au moins un capteur adapté pour détecter la présence de glace (9) sur la surface dudit aéronef (5).

12. Procédé selon la revendication 11, comprenant le pilotage d'un robot-citerne (12) en fonction desdites données détectées au moyen dudit au moins un capteur (18) afin de pulvériser un liquide de dégivrage et/ou d'antigivrage sur les zones de la surface dudit aéronef (5) qui comprennent de la glace (9).

13. Système d'analyse pour un aéronef, comprenant au moins un drone (1) et une unité de traitement (250), dans lequel ledit système d'analyse est configuré pour mettre en œuvre le procédé selon l'une quelconque des revendications précédentes 1 à 11.

14. Système selon la revendication 13, dans lequel ladite unité de traitement (250) est incorporée dans ledit au moins un drone (1) ou distante par rapport audit au moins un drone (1).

15. Système de dégivrage et/ou d'antigivrage comprenant le système d'analyse de la revendication 13 et un robot-citerne (12), et dans lequel le système de dégivrage et/ou d'antigivrage est configuré pour mettre en œuvre le procédé selon la revendication 12.
